# EUROPÄISCHE PATENTSCHRIFT

(11) **EP 3 429 900 B1**
(45) Veröffentlichungstag und Bekanntmachung des Hinweises auf die Patenterteilung: **02.12.2020**
(21) Anmeldenummer: 17717742.5
(22) Anmeldetag: 18.04.2017
(51) Int. Cl.: B61D 17/02, B61D 17/06, B61D 25/00

(54) **FAHRZEUG, INSBESONDERE SCHIENENFAHRZEUG**
VEHICLE, IN PARTICULAR RAIL VEHICLE
VÉHICULE, EN PARTICULIER VÉHICULE FERROVIAIRE

(30) Priorität: 20.05.2016 DE 102016208693
(43) Veröffentlichungstag der Anmeldung: 23.01.2019
(73) Patentinhaber: Siemens Mobility GmbH, 81739 München (DE)
(72) Erfinder: BENSIEK, Ingo, 47829 Krefeld (DE); STARKE, Jürgen, 40223 Düsseldorf (DE)
(86) Internationale Anmeldenummer: PCT/EP2017/059188
(87) Internationale Veröffentlichungsnummer: WO 2017/198411

(56) Entgegenhaltungen:
- EP-A1- 2 000 382
- EP-A1- 3 144 167
- WO-A1-2014/146681
- GB-A- 2 259 539
- JP-A- H09 164 948
- JP-A- 2000 177 383
- JP-A- 2001 058 568

## Beschreibung

Die Erfindung bezieht sich unter anderem auf ein Fahrzeug, insbesondere Schienenfahrzeug, mit einer zumindest abschnittsweise gewölbten Fahrzeugaußenhaut, nach dem Oberbegriff von Anspruch 1.

Ein solches Fahrzeug ist beispielsweise aus der EP 2 000 382 A2 bekannt.

Bei modernen Schienenfahrzeugen ist der Fahrzeugkopf üblicherweise aerodynamisch und designtechnisch optimiert, also in der Regel gewölbt, ausgeführt. Seitenfenster im Bereich des Führerraums werden an die Außenkontur des Fahrzeugkopfes angepasst und gewölbt ausgeführt. Gewölbte Seitenfenster sind jedoch in der Herstellung teuer.

Im Hinblick auf Artikel 54(3) EPÜ ist auf die EP 3 144 167 A1 hinzuweisen, aus der sich ein Fahrzeug mit einer zumindest abschnittsweise gewölbten Fahrzeugaußenhaut ergibt, bei dem eine oberseitige Öffnung in einem gewölbten Abschnitt der Fahrzeugaußenhaut ein außenseitig gewölbter Adapterrahmen eingesetzt ist, dessen Außenseite - zumindest im Bereich seiner an die gewölbte Fahrzeugaußenhaut angrenzenden Außenkontur - der Wölbung der gewölbten Fahrzeugaußenhaut folgt und in den Innenbereich des Adapterrahmens eine plane Fensterscheibe eingesetzt ist, die von dem Adapterrahmen gehalten wird. Bei dem dort beschriebenen Fahrzeug handelt es sich insbesondere um ein Wohnmobil.

Der Erfindung liegt demgemäß die Aufgabe zugrunde, ein Fahrzeug anzugeben, bei dem die beschriebene Problematik eines Einbaus von Fensterscheiben in die Fahrzeugaußenhaut besser gelöst ist als bei bisherigen Fahrzeugen.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass in den Innenbereich des Adapterrahmens eine plane Fensterscheibe eingesetzt ist, die von dem Adapterrahmen gehalten wird, und der Adapterrahmen eine Vertiefung aufweist, die, ausgehend von einem vertiefungsfreien und mit der Wölbung der gewölbten Fahrzeugaußenhaut flächenbündigen äußeren Randbereich des Adapterrahmens, in Richtung der planen Fensterscheibe tiefer wird und ihre größte Tiefe an der Schnittstelle zu einem Rand der planen Fensterscheibe aufweist.

Ein wesentlicher Vorteil des erfindungsgemäßen Fahrzeugs ist darin zu sehen, dass durch den erfindungsgemäß vorgesehenen Einsatz eines Adapterrahmens trotz eines Einbaus einer planaren Fensterscheibe eine außenseitige Anpassung an die Wölbung der Fahrzeughaut erreichbar ist. Ein solcher Adapterrahmen ermöglicht somit den Einsatz kostengünstiger planer Fensterscheiben, ohne dass deshalb auf optimale aerodynamische Eigenschaften des Fahrzeugs oder eine ansprechende äußere Form verzichtet werden müsste.

Mit Blick auf minimales Gewicht und eine einfache Formgestaltung wird es als vorteilhaft angesehen, wenn das Adaptermodul aus Kunststoff, insbesondere aus faserverstärktem bzw. glasfaserverstärktem Kunststoff besteht.

Der Adapterrahmen hält die plane Fensterscheibe vorzugsweise stufenfrei, d. h. ohne Ausbildung einer Übergangsstufe.

Mit Blick darauf, dass die Wölbungsproblematik im Seitenwandbereich von Fahrzeugköpfen, insbesondere im Bereich des Führerstandes, besonders ausgeprägt ist, wird es als vorteilhaft angesehen, wenn die rohbauseitige Öffnung in einer Seitenwand im Fahrzeugkopfbereich des Fahrzeugs angeordnet ist und die plane Fensterscheibe eine Seitenscheibe im Führerstand des Fahrzeugs bildet.

Der Adapterrahmen weist vorzugsweise einen Anpassungsabschnitt auf, der einen stufenfreien Übergang zwischen einer im Bereich der gewölbten Außenkontur befindlichen Außenkante des Adapterrahmens und einer Scheibenkante der planen Scheibe bildet.

Die Vertiefung wird vorzugsweise entlang der Fahrzeuglängsrichtung stufenfrei tiefer.

Besonders vorteilhaft ist es, wenn die Vertiefung von einem vertiefungsfreien äußeren Randbereich des Adapterrahmens in Richtung der planen Fensterscheibe stufenfrei tiefer wird und sowohl die Schnittstelle zwischen dem Rand der Vertiefung und dem angrenzenden Rand der planen Fensterscheibe stufenfrei ist als auch der Übergang zwischen der Vertiefung und dem vertiefungsfreien äußeren Randbereich des Adapterrahmens.

Der vertiefungsfreie äußere Randbereich des Adapterrahmens liegt dem angrenzenden Rand der planen Fensterscheibe vorzugsweise entlang der Fahrzeuglängsrichtung gesehen diametral gegenüber.

Die plane Fensterscheibe ist - in Fahrzuglängsrichtung gesehen - vorzugsweise zwischen der Vertiefung und dem Kopfende des Fahrzeugkopfes angeordnet. Eine solche Anordnung gewährleistet optimale aerodynamische Eigenschaften der Fahrzeugaußenhaut im Bereich der Fensterscheibe, sowohl bei Vorwärtsfahrt als auch bei Rückwärtsfahrt des Fahrzeugs.

Die Vertiefung wird - ausgehend von einem vertiefungsfreien und mit der Wölbung der gewölbten Fahrzeugaußenhaut flächenbündigen äußeren Randbereich des Adapterrahmens - vorzugsweise entlang der Fahrzeuglängsrichtung und in Richtung des Fahrzeugkopfes gesehen - tiefer und erreicht ihre größte Tiefe an der Schnittstelle zu einem vertikalen oder zumindest im Wesentlichen vertikalen (± 10 Grad von der Vertikalen) Rand der planen Fensterscheibe.

Die Vertiefung wird vorzugsweise linear tiefer und ist in Fahrzeuglängsrichtung rampenförmig.

Die Vertiefung in dem Adapterrahmen beruht vorzugsweise ausschließlich oder zumindest auch auf einer lokalen Verdünnung der Materialdicke des Adapterrahmens.

Die plane Fensterscheibe ist - vom Fahrzeuginneren aus gesehen - vorzugsweise innen an den Adapterrahmen angeklebt und/oder angeschraubt; und der Adapterrahmen ist - vom Fahrzeuginneren aus gesehen - vorzugsweise innen an den Fahrzeugrohbau des Fahrzeugs angeklebt und/oder angeschraubt.

Mit Blick auf minimales Gewicht und eine einfache Formgestaltung wird es als vorteilhaft angesehen, wenn das Adaptermodul aus Kunststoff, insbesondere aus faserverstärktem bzw. glasfaserverstärktem Kunststoff, hergestellt wird.

Die Erfindung wird nachfolgend anhand von Ausführungsbeispielen näher erläutert; dabei zeigen beispielhaft
- Figur 1: einen Fahrzeugkopf eines Ausführungsbeispiels für ein erfindungsgemäßes Schienenfahrzeug in einer Seitenansicht,
- Figur 2: einen mit einem Seitenfenster versehenen Abschnitt des Fahrzeugkopfes gemäß Figur 1 näher im Detail,
- Figur 3: einen Längsschnitt durch das Seitenfenster in Längsrichtung bzw. entlang der Schnittlinie III-III in Figur 1,
- Figur 4: einen Querschnitt entlang der Fahrzeugquerrichtung und gemäß der Schnittlinie IV-IV in Figur 1 und
- Figur 5: eine Einzelheit des Querschnitts gemäß Figur 4 zur Darstellung einer beispielhaften Anbindung einer planen Fensterscheibe in einem Adapterrahmen näher im Detail.

In den Figuren werden der Übersicht halber für identische oder vergleichbare Komponenten stets dieselben Bezugszeichen verwendet.

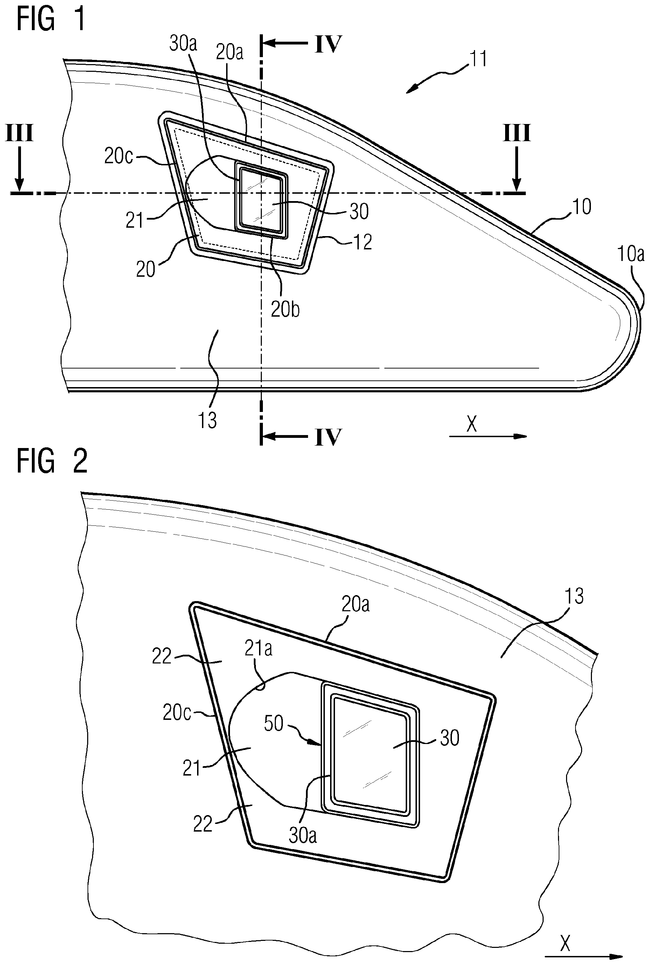

Die Figur 1 zeigt in einer Sicht von der Seite einen Fahrzeugkopf 10 eines Schienenfahrzeugs 11. Es lässt sich erkennen, dass die Fahrzeughaut des Schienenfahrzeugs 11 im Bereich des Fahrzeugkopfes 10 gewölbt, zumindest abschnittsweise gewölbt, ist.

In einem gewölbten Abschnitt der Außenhaut weist der Fahrzeugkopf 10 eine rohbauseitige Öffnung 12 auf, in die ein Adapterrahmen 20 eingesetzt ist. Die Außenseite des Adapterrahmens 20 folgt zumindest im Bereich der an die gewölbte Fahrzeugaußenhaut angrenzenden Außenkontur 20a der Wölbung der Fahrzeughaut bzw. ist dort an diese angepasst.
Der Adapterrahmen 20 besteht vorzugsweise aus Kunststoff, insbesondere faserverstärktem wie beispielsweise glasfaserverstärktem Kunststoff.

In einem Innenbereich 20b des Adapterrahmens 20 ist eine plane Fensterscheibe 30 eingesetzt, die von dem Adapterrahmen 20 gehalten wird. Da die plane Fensterscheibe 30, wie in Figur 1 gezeigt, im Bereich einer gewölbten Seitenwand 13 des Fahrzeugkopfes 10 angeordnet ist, kann sie auch als Seitenfenster bezeichnet werden.

Um einen stufenfreien Übergang zwischen der von dem Kopfende 10a des Fahrzeugkopfes 10 entfernten Scheibenkante 30a und der von dem Kopfende 10a entfernten Außenkante 20c des Adapterrahmens 20 zu ermöglichen, ist der Adapterrahmen 20 mit einem Anpassungsabschnitt in Form einer Vertiefung 21 versehen. Die Vertiefung 21 erstreckt sich von der in der Figur 1 linken Außenkante 20c des Adapterrahmens 20 entlang der Pfeilrichtung X - also entlang der Fahrzeuglängsrichtung in Richtung Kopfende 10a - zu dem in der Figur 1 linken Scheibenrand bzw. zu der von dem Kopfende 10a abgewandten bzw. entfernten Scheibenkante 30a der Fensterscheibe 30.

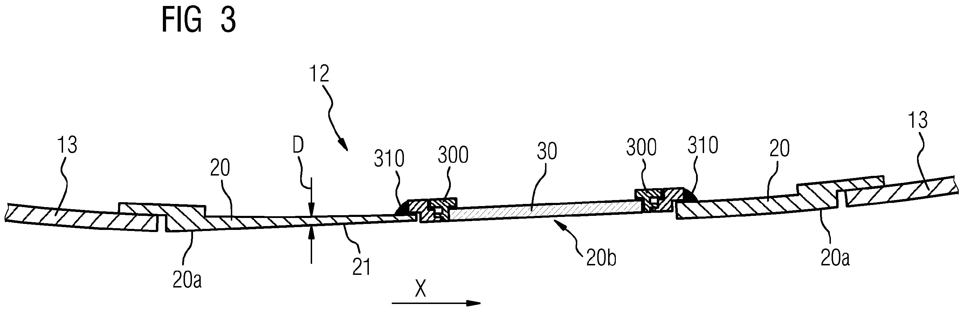

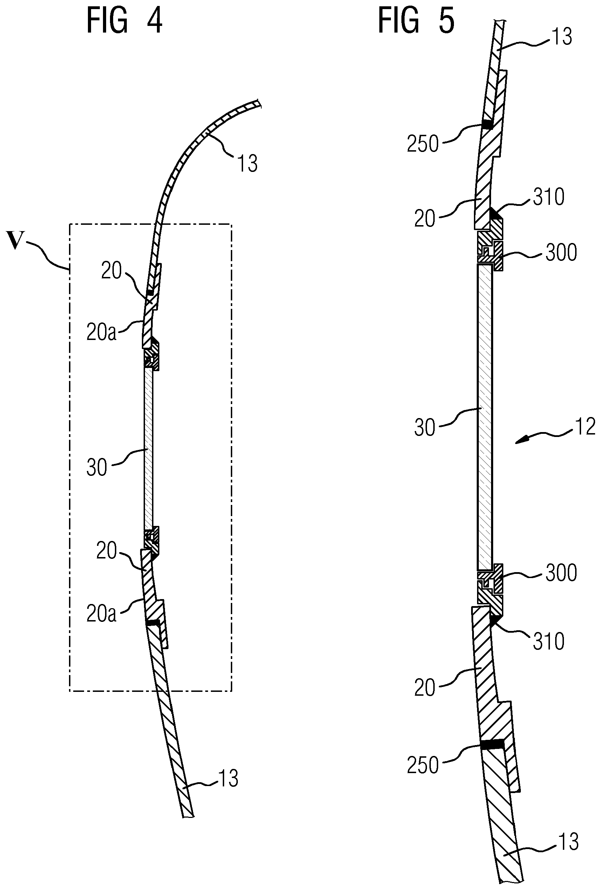

In der Figur 1 sind Schnittlinien III-III und IV-IV eingezeichnet, auf die weiter unten im Zusammenhang mit den Figuren 3 und 4 näher eingegangen wird.

Die Figur 2 zeigt den Adapterrahmen 20 sowie die von diesem gehaltene plane Fensterscheibe 30 gemäß Figur 1 näher im Detail. Es lässt sich erkennen, dass die vom Kopfende 10a (vgl. Figur 1) entfernte Scheibenkante 30a der Fensterscheibe 30 vertikal oder zumindest näherungsweise vertikal (± 10 Grad von der Vertikalen) verläuft und eine Schnittstelle 50 mit der Vertiefung 21 des Adapterrahmens 20 bildet.

Um eine Stufenfreiheit mit bestmöglichen aerodynamischen Eigenschaften der Fahrzeugaußenhaut des Schienenfahrzeugs 11 sowie außerdem ein ansprechendes Fahrzeugdesign zu erreichen, ist bei dem Ausführungsbeispiel gemäß Figur 2 eine Rampenform der Vertiefung 21 vorgesehen. Ausgehend von der Schnittstelle 50, wo die Vertiefung 21 am tiefsten ist, steigt die Vertiefung 21, vorzugsweise linear bzw. rampenförmig entlang der Fahrzeuglängsrichtung in Richtung zu der vom Kopfende 10a entfernten Außenkante 20c des Adapterrahmens 20 an und läuft in einem kreisbogenförmigen Vertiefungsrand 21a aus, der mit der Wölbung der gewölbten Seitenwand 13 und der dort korrespondierenden Wölbung des vertiefungsfreien äußeren Randbereichs 22 des Adapterrahmens 20 stufenfrei und vorzugsweise flächenstetig abschließt.

Aufgrund der Anordnung der Vertiefung 21 neben dem vom Kopfende 10a entfernten vertikalen Rand der Fensterscheibe 30 und der stufenfreien und flächenstetigen Ausführung der Vertiefung wird erreicht, dass bei einer Vorwärtsfahrt des Fahrzeugkopfes 10 entlang der Pfeilrichtung X in Figur 1 der Fahrtwind mit minimalen Verwirbelungen sowohl die plane Fensterscheibe 30 als auch die Vertiefung passiert, wodurch optimale aerodynamische Eigenschaften erreicht werden. Die vorzugsweise lineare bzw. rampenförmige Ausgestaltung der Vertiefung stellt außerdem ein modernes und ansprechendes Fahrzeugdesign dar.

Die Figur 3 zeigt die Anbindung des Adapterrahmens 20 an die rohbauseitige Öffnung 12 in der gewölbten Seitenwand 13 des Fahrzeugkopfes 10 sowie die Anbindung der planen Fensterscheibe 30 im Innenbereich 20b des Adapterrahmens 20 näher im Detail, und zwar entlang eines Längsschnitts entlang der Fahrzeuglängsrichtung bzw. entlang der Schnittlinie III-III in Figur 1.

Es lässt sich erkennen, dass der Adapterrahmen 20 im Bereich seiner an die gewölbte Fahrzeugaußenhaut angrenzenden Außenkontur 20a der Wölbung der Seitenwand 13 folgt, so dass im Schnittstellenbereich zwischen dem Adapterrahmen 20 und der gewölbten Seitenwand 13 keine Stufenbildung erfolgt. Der in der Figur 3 erkennbare Spalt zwischen dem Adapterrahmen 20 und der rohbauseitigen Öffnung 12 wird vorzugsweise mit einer Dicht- und oder Klebemasse unter Bildung einer Dicht- und/oder Klebefuge gefüllt, wie sie in der Figur 5 dargestellt und dort mit dem Bezugszeichen 250 gekennzeichnet ist.

Die Figur 3 lässt darüber hinaus die Anbindung der planen Fensterscheibe 30 an den Adapterrahmen 20 erkennen. Die Anbindung erfolgt vorzugsweise durch Anschrauben und/oder Verkleben. In der Figur 3 ist beispielhaft eine Anbindung gezeigt, bei der ein zusätzliches Adapterelement 300 zwischen Adapterrahmen 20 und Fensterscheibe 30 eingesetzt ist. Das zusätzliche Adapterelement 300 kann mit der Fensterscheibe 30 und dem Adapterrahmen 20 beispielsweise mittels Klebstoff 310 verklebt sein.

Das zusätzliche Adapterelement 300 kann beispielsweise aus Metall, wie beispielsweise Aluminium, oder Kunststoff, insbesondere faserverstärktem wie beispielsweise glasfaserverstärktem Kunststoff, bestehen.

In der Figur 3 lässt sich darüber hinaus erkennen, wie sich die im Zusammenhang mit den Figuren 1 und 2 bereits im Detail angesprochene Vertiefung 21 realisieren lässt. So zeigt die Figur 3, dass der Adapterrahmen 20 im Bereich der Vertiefung vorzugsweise in Richtung der Fensterscheibe 30 dünner wird. Die Dicke D des Adapterrahmens 20 nimmt entlang der Pfeilrichtung X in Richtung der Fensterscheibe 30 stufenfrei und vorzugsweise linear ab, wie in der Figur 3 deutlich erkennbar ist.

Die Figur 4 zeigt die Anbindung des Adapterrahmens 20 sowie der planen Fensterscheibe 30 in einem Querschnitt entlang der Querschnittlinie IV-IV gemäß Figur 1. Es lässt sich erkennen, dass der Adapterrahmen 20 im Bereich seiner an die gewölbte Fahrzeugaußenhaut angrenzenden Außenkontur 20a der Wölbung der gewölbten Fahrzeugaußenhaut folgt.

Darüber hinaus lässt sich erkennen, dass durch die Ausgestaltung des Adapterrahmens 20 die plane Ausgestaltung der Fensterscheibe 30 weder einen wesentlichen negativen aerodynamischen Einfluss noch eine Designeinbuße zur Folge hat, da der Adapterrahmen 20 die fehlende Wölbung der planen Fensterscheibe 30 gegenüber der Wölbung der Außenhaut gut kaschiert. Die Figur 5 zeigt die in der Figur 4 mit dem Bezugszeichen V gekennzeichnete Einzelheit näher im Detail. Es lässt sich erkennen, dass die plane Fensterscheibe 30 innenseitig mittels eines Adapterelements 300 am Adapterrahmen 20 angeklebt ist; der Klebstoff ist in der Figur 5 mit dem Bezugszeichen 310 gekennzeichnet.

Alternativ kann die Fensterscheibe 30 auch auf andere Weise am Adapterrahmen 20 befestigt sein, beispielsweise unmittelbar ohne Adapterelement 300; auch kann eine Befestigung auf Klemmen oder Verschrauben oder einer Kombination aus Klemmen, Verschrauben und/oder Kleben beruhen.

Darüber hinaus zeigt die Figur 5 näher im Detail, dass der Adapterrahmen 20 vorzugsweise innenseitig an der rohbauseitigen Öffnung 12 der gewölbten Seitenwand 13 befestigt wird. Der Adapterrahmen 20 kann beispielsweise mittels Klebstoff unter Bildung einer Dicht- und/oder Klebefuge 250 auf der Innenseite des Rohbaus angeklebt sein. Alternativ kann der Adapterrahmen auch anders befestigt werden, beispielsweise angeschraubt oder verklemmt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen im Rahmen der Ansprüche können vom Fachmann hieraus abgeleitet werden, ohne den Schutzumfang der Erfindung zu verlassen.

## Patentansprüche

1. Fahrzeug, insbesondere Schienenfahrzeug (11), mit einer zumindest abschnittsweise gewölbten Fahrzeugaußenhaut,
wobei
- in eine rohbauseitige Öffnung (12) in einem gewölbten Abschnitt der Fahrzeugaußenhaut ein außenseitig gewölbter Adapterrahmen (20) eingesetzt ist, dessen Außenseite, zumindest im Bereich seiner an die gewölbte Fahrzeugaußenhaut angrenzenden Außenkontur (20a), der Wölbung der gewölbten Fahrzeugaußenhaut folgt,
**dadurch gekennzeichnet, dass**
- in den Innenbereich (20b) des Adapterrahmens (20) eine plane Fensterscheibe (30) eingesetzt ist, die von dem Adapterrahmen (20) gehalten wird und
- der Adapterrahmen (20) eine Vertiefung (21) aufweist, die, ausgehend von einem vertiefungsfreien und mit der Wölbung der gewölbten Fahrzeugaußenhaut flächenbündigen äußeren Randbereich (22) des Adapterrahmens (20), in Richtung der planen Fensterscheibe (30) tiefer wird und ihre größte Tiefe an der Schnittstelle (50) zu einem Rand der planen Fensterscheibe (30) aufweist.

2. Fahrzeug nach Anspruch 1,
**dadurch gekennzeichnet, dass**
der Adapterrahmen (20) die plane Fensterscheibe (30) stufenfrei hält.

3. Fahrzeug nach einem der voranstehenden Ansprüche,
**dadurch gekennzeichnet, dass**
- die rohbauseitige Öffnung (12) in einer Seitenwand (13) im Fahrzeugkopfbereich des Fahrzeugs angeordnet ist und
- die plane Fensterscheibe (30) eine Seitenscheibe im Führerstand des Fahrzeugs bildet.

4. Fahrzeug nach einem der voranstehenden Ansprüche,
**dadurch gekennzeichnet, dass**
der Adapterrahmen (20) einen Anpassungsabschnitt aufweist, der einen stufenfreien Übergang zwischen einer im Bereich der gewölbten Außenkontur (20a) befindlichen Außenkante (20c) des Adapterrahmens (20) und einer Scheibenkante (30a) der planen Fensterscheibe (30) bildet.

5. Fahrzeug nach einem der voranstehenden Ansprüche,
**dadurch gekennzeichnet, dass**
die Vertiefung (21) entlang der Fahrzeuglängsrichtung (X) stufenfrei tiefer wird.

6. Fahrzeug nach einem der voranstehenden Ansprüche,
**dadurch gekennzeichnet, dass**
- die Vertiefung (21) von einem vertiefungsfreien äußeren Randbereich (22) des Adapterrahmens (20) in Richtung der planen Fensterscheibe (30) stufenfrei tiefer wird und
- sowohl die Schnittstelle (50) zwischen dem Rand der Vertiefung (21) und dem angrenzenden Rand der planen Fensterscheibe (30) stufenfrei ist als auch der Übergang zwischen der Vertiefung (21) und dem vertiefungsfreien äußeren Randbereich (22) des Adapterrahmens (20),
- wobei der genannte Rand der planen Fensterscheibe (30) entlang der Fahrzeuglängsrichtung (X) dem vertiefungsfreien äußeren Randbereich (22) des Adapterrahmens (20) diametral gegenüber liegt.

7. Fahrzeug nach einem der voranstehenden Ansprüche,
**dadurch gekennzeichnet, dass**
die plane Fensterscheibe (30) - in Fahrzeuglängsrichtung (X) gesehen - zwischen der Vertiefung (21) und dem Kopfende (10a) des Fahrzeugkopfes (10) angeordnet ist.

8. Fahrzeug nach Anspruch 7, **dadurch gekennzeichnet, dass**
die Vertiefung (21) - ausgehend von einem vertiefungsfreien und mit der Wölbung der gewölbten Fahrzeugaußenhaut flächenbündigen äußeren Randbereich (22) des Adapterrahmens (20) - entlang der Fahrzeuglängsrichtung (X) und in Richtung des Fahrzeugkopfes (10) gesehen - tiefer wird und ihre größte Tiefe an der Schnittstelle (50) zu einem vertikalen Rand oder zumindest im Wesentlichen vertikalen Rand der planen Fensterscheibe (30) aufweist.

9. Fahrzeug nach einem der voranstehenden Ansprüche,
**dadurch gekennzeichnet, dass**
die Vertiefung (21) linear tiefer wird und die Vertiefung (21) in Fahrzeuglängsrichtung (X) rampenförmig ist.

10. Fahrzeug nach einem der voranstehenden Ansprüche,
**dadurch gekennzeichnet, dass**
die Vertiefung (21) auf einer lokalen Verdünnung der Materialdicke des Adapterrahmens (20) beruht.

11. Fahrzeug nach einem der voranstehenden Ansprüche,
**dadurch gekennzeichnet, dass**
die plane Fensterscheibe (30) - vom Fahrzeuginneren aus gesehen - innen an den Adapterrahmen (20) und der Adapterrahmen innen an den Fahrzeugrohbau des Fahrzeugs angeklebt oder angeschraubt ist.

## Claims

1. Vehicle, in particular rail vehicle (11), with a vehicle exterior skin which is curved at least in sections,
- an adapter frame (20) which is curved on the outer side being inserted into a shell-side opening (12) in a curved section of the vehicle exterior skin, the outer side of which adapter frame (20), at least in the region of its outer contour (20a) which adjoins the curved vehicle exterior skin, follows the curvature of the curved vehicle exterior skin,
**characterized in that**
- a planar window pane (30) which is held by the adapter frame (20) is inserted into the inner region (20b) of the adapter frame (20), and
- the adapter frame (20) has a depression (21) which, starting from an outer edge region (22) of the adapter frame (20), which outer edge region (22) is depression-free and flush-mounted with the curvature of the curved vehicle exterior skin, becomes deeper in the direction of the planar window pane (30) and has its greatest depth at the interface (50) with an edge of the planar window pane (30) .

2. Vehicle according to Claim 1,
**characterized in that**
the adapter frame (20) keeps the planar window pane (30) step-free.

3. Vehicle according to either of the preceding claims,
**characterized in that**
- the shell-side opening (12) is arranged in a side wall (13) in the vehicle front region of the vehicle, and
- the planar window pane (30) forms a side pane in the driver's cab of the vehicle.

4. Vehicle according to one of the preceding claims,
**characterized in that**
the adapter frame (20) has an adaptation section which forms a step-free transition between an outer edge (20c) of the adapter frame (20), which outer edge (20c) is situated in the region of the curved outer contour (20a), and a pane edge (30a) of the planar window pane (30).

5. Vehicle according to one of the preceding claims,
**characterized in that**
the depression (21) becomes deeper in a step-free manner along the vehicle longitudinal direction (X).

6. Vehicle according to one of the preceding claims,
**characterized in that**
- the depression (21) becomes deeper in a step-free manner from a depression-free outer edge region (22) of the adapter frame (20) in the direction of the planar window pane (30), and
- both the interface (50) between the edge of the depression (21) and the adjoining edge of the planar window pane (30) and the transition between the depression (21) and the depression-free outer edge region (22) of the adapter frame (20) are step-free,
- the said edge of the planar window pane (30) lying diametrically opposite the depression-free outer edge region (22) of the adapter frame (20) along the vehicle longitudinal direction (X).

7. Vehicle according to one of the preceding claims
**characterized in that**
the planar window pane (30) is arranged, as viewed in the vehicle longitudinal direction (X), between the depression (21) and the front end (10a) of the vehicle front (10).

8. Vehicle according to Claim 7,
**characterized in that**,
starting from a depression-free outer edge region (22) of the adapter frame (20), which outer edge region (22) is flush-mounted with the curvature of the curved vehicle exterior skin, the depression (21) becomes deeper, as viewed along the vehicle longitudinal direction (X) and in the direction of the vehicle front (10), and has its greatest depth at the interface (50) with a vertical edge or at least substantially vertical edge of the planar window pane (30).

9. Vehicle according to one of the preceding claims,
**characterized in that**
the depression (21) becomes deeper in a linear manner, and the depression (21) is ramp-shaped in the vehicle longitudinal direction (X).

10. Vehicle according to one of the preceding claims,
**characterized in that**
the depression (21) is based on local thinning of the material thickness of the adapter frame (20).

11. Vehicle according to one of the preceding claims,
**characterized in that**,
as viewed from the vehicle interior, the planar window pane (30) is adhesively bonded or screwed on the inside to the adapter frame (20), and the adapter frame is adhesively bonded or screwed on the inside to the vehicle shell of the vehicle.

## Revendications

1. Véhicule, notamment véhicule (11) ferroviaire, ayant une peau extérieure de véhicule cintrée au moins par endroit,
dans lequel
- dans une ouverture (12) du côté du chaudron, il est inséré, dans une partie cintrée de la peau extérieure du véhicule, un cadre (20) formant adaptateur cintré du côté extérieur, dont la face extérieure suit, au moins dans la partie de son contour (20a) extérieur voisin de la peau extérieure du véhicule cintrée, le cintrage de la peau extérieure du véhicule cintrée,
**caractérisé en ce que**
- dans la partie (20b) intérieure du cadre (20) formant adaptateur est insérée une vitre (30) de fenêtre, qui est maintenue par le cadre (20) formant adaptateur et
- le cadre (20) formant adaptateur a un creux (21), qui, à partir d'une partie (22) extérieure de bord, sans creux et à affleurement de surface avec le cintrage de la peau extérieure du véhicule cintrée, du cadre (20) de l'adaptateur devient plus profonde en direction de la vitre (30) plane de fenêtre et a sa profondeur la plus grande à l'interface (50) avec un bord de la vitre (30) plane de fenêtre.

2. Véhicule suivant la revendication 1,
**caractérisé en ce que**
le cadre (20) formant adaptateur maintient, d'une manière continue, la vitre (30) plane de fenêtre.

3. Véhicule suivant l'une des revendications précédentes, **caractérisé en ce que**
- l'ouverture (12) du côté du chaudron est disposée dans une paroi (13) latérale de la partie de tête du véhicule et
- la vitre (30) plane de fenêtre forme une vitre latérale de la cabine de conducteur du véhicule.

4. Véhicule suivant l'une des revendications précédentes,
**caractérisé en ce que**
le cadre (30) formant adaptateur a une partie d'adaptation, qui forme une transition sans palier entre un bord (20c) extérieur, se trouvant dans la partie du contour (20a) extérieure cintrée, du cadre (20) formant adaptateur et un bord (30a) de la vitre (30) plane de fenêtre.

5. Véhicule suivant l'une des revendications précédentes,
**caractérisé en ce que**
le creux (21) devient plus profond d'une manière continue suivant la direction (X) longitudinale du véhicule.

6. Véhicule suivant l'une des revendications précédentes,
**caractérisé en ce que**
- le creux (21) devient plus profond d'une manière continue d'une partie (22) de bord extérieure sans creux du cadre (20) formant adaptateur, en direction de la vitre (30) plane de fenêtre et
- à la fois l'interface (50) entre le bord du creux (21) et le bord voisin de la vitre (30) plane de fenêtre et la transition entre le creux (21) et la partie (22) de bord extérieure sans creux du cadre (20) formant adaptateur sont sans palier,
- dans lequel ledit bord de la vitre (30) plane de fenêtre est opposé diamétralement suivant la direction (X) longitudinale du véhicule à la partie (22) de bord extérieure sans creux du cadre (20) formant adaptateur.

7. Véhicule suivant l'une des revendications précédentes,
**caractérisé en ce que**
la vitre (30) plane de fenêtre - considéré dans la direction (X) longitudinale du véhicule - est disposée entre le creux (21) et l'extrémité (10a) de la tête (10) du véhicule.

8. Véhicule suivant la revendication 7,
**caractérisé en ce que**
le creux (21) - considéré à partir d'une partie (22) de bord extérieure sans creux et à affleurement avec le cintrage de la peau extérieure du véhicule cintrée, du cadre (20) formant adaptateur - devient plus profond suivant la direction (X) longitudinale du véhicule et en direction de la tête (10) du véhicule et a sa profondeur la plus grande à l'interface (50) avec un bord vertical ou au moins un bord sensiblement vertical de la vitre (30) plane de fenêtre.

9. Véhicule suivant l'une des revendications précédentes,
**caractérisé en ce que**
le creux (21) devient plus profond d'une manière linéaire et le creux (21) est en forme de rampe dans la direction (X) longitudinale du véhicule.

10. Véhicule suivant l'une des revendications précédentes,
**caractérisé en ce que**
le creux (21) repose sur un amincissement local de l'épaisseur de matériau du cadre (20) formant adaptateur.

11. Véhicule suivant l'une des revendications précédentes,
**caractérisé en ce que**
la vitre (30) plane de fenêtre - considéré depuis l'intérieur du véhicule - est collée ou vissée à l'intérieur au cadre (20) formant adaptateur et le cadre formant adaptateur à l'intérieur au chaudron du véhicule.
